# EUROPÄISCHE PATENTSCHRIFT

(11) **EP 3 774 625 B1**
(45) Veröffentlichungstag und Bekanntmachung des Hinweises auf die Patenterteilung: **10.07.2024**
(21) Anmeldenummer: 19716319.9
(22) Anmeldetag: 26.03.2019
(51) Int. Cl.: B65H 49/38

(54) **TRANSPORTSYSTEM FÜR EIN ROHR UND VERFAHREN ZUM AUSLIEFERN EINES ROHRS**
TRANSPORT SYSTEM FOR A PIPE AND METHOD FOR DELIVERING A PIPE
SYSTÈME DE TRANSPORT POUR UN TUYAU ET PROCÉDÉ DE DISTRIBUTION D'UN TUYAU

(30) Priorität: 27.03.2018 DE 102018107306
(43) Veröffentlichungstag der Anmeldung: 17.02.2021
(73) Patentinhaber: Alleima GmbH, 33824 Werther (DE)
(72) Erfinder: HEDVALL, Christofer, 33615 Bielefeld (DE); FROBÖSE, Thomas, 33775 Versmold (DE)
(74) Vertreter: Setréus, Ellen
(86) Internationale Anmeldenummer: PCT/EP2019/057610
(87) Internationale Veröffentlichungsnummer: WO 2019/185639

(56) Entgegenhaltungen:
- WO-A1-2012/027775
- WO-A1-2015/131096
- WO-A1-2017/147656
- GB-A- 2 471 488
- JP-A- H03 180 234
- US-A- 3 242 566
- US-A- 3 965 713
- US-A- 4 157 023
- US-A1- 2011 072 874
- US-A1- 2014 373 587

## Beschreibung

### TECHNISCHES GEBIET

Die vorliegende Erfindung betrifft ein Transportsystem für ein Rohr.

Die vorliegende Erfindung betrifft ein zudem ein Verfahren zum Ausliefern eines Rohrs.

### HINTERGRUND

Eine Vielzahl von Rohren, insbesondere aber kaltumgeformte Rohre aus Edelstahl, lassen sich nach der eigentlichen Herstellung des Rohrs nur schwer weiterverarbeiten, ohne dass sich die Materialeigenschaften des Rohrs ändern. Beispielhaft werden hier Hochdruckrohre aus Edelstahl zur Führung von flüssigem Wasserstoff betrachtet, wie sie zum Verbinden eines Vorratstanks mit einer Zapfsäule an einer Wasserstofftankstelle benötigt werden. Derartige Rohre werden heute als Rohrabschnitte auf die jeweilige Baustelle geliefert und dort mit Hilfe von Rohrverschraubungen (Fittings) miteinander verbunden. Dabei werden die Rohre in maximalen Längen geliefert, so wie sie ausgestreckt auf einem Lkw transportiert werden können. Typische maximale Längen der einzelnen gelieferten Rohrabschnitte betragen daher etwa 12 m. Häufig sind jedoch auf der Baustelle Rohrleitungen mit einer deutlich größeren Länge zu verlegen. Da ein Schweißen der kaltverfestigten Rohre zu Materialveränderungen im Bereich der Schweißstelle führen, kommt nur ein Verschrauben der Rohre in Betracht. Allerdings liegen die Verschraubungen nach dem Fertigstellen der Baustelle häufig unter der Erde, was eine Wartung der jeweiligen Verschraubung aufwendig oder unmöglich macht.

Die WO 2017/147656 A1 offenbart einen Abwickelanhänger zum Abwickeln großer aufgewickelter Kunststoffrohre. Der Abwickelanhänger verwendet eine wiederverwendbare Spule, um das aufgewickelte Rohr innerhalb des Abwickelanhängers zu sichern. Ein Relais oder eine Folge von Spulen- und Rohrspulenbaugruppen kann in den Abwickelanhänger im Austausch gegen eine leere oder verbrauchte Spule aus dem Abwickelanhänger geladen werden. Die leere Spule kann mit einer anderen Rohrspule weiter hinten in der Verlegestrecke wieder beladen werden. Eine Heckklappe des Abwickelanhängers hat einen Abziehkopf mit einem Rohrabzug. Im Einsatz kann der Abziehkopf dazu verwendet werden, den abzuwickelnden Rohrabschnitt durch den Abziehkopf gegen einen gekoppelten Bremswiderstand zu ziehen, der auf die Drehung der abwickelnden Rohrspule und/oder des Spulenkörpers wirkt.

Die US 2011/0072874 A1 offenbart ferner ein Transportsystem, welches über einen speziellen Anhänger für den Transport einer kleinen Transportspule für einen nahtlosen Strang auf eine Baustelle verfügt. Der Anhänger hat einen Ständer, der die Spule schwenken kann. Ein Nabenmotor auf dem Stände kann die Spule drehen, und eine Transfereinheit und eine Strangbiegevorrichtung auf dem Anhänger können den Strang biegen oder begradigen, wenn sie in die Spule eingeführt oder aus ihr herausgeführt wird. Ein Kraft- und Hydrauliksystem betreibt die verschiedenen hydraulischen Komponenten auf dem Anhänger. Ferner umfasst das Transportsystem Ständer, die die kleinen Transportrollen auf einem Anhänger innerhalb eines definierten Transportraumes halten können. Im leeren Zustand können diese Ständer auf dem Anhänger übereinander gestapelt werden, um sie zu einer Produktionsanlage zurückzubringen. Die JP H03 180234 A offenbart einen Lastkraftwagen mit einem Aufbau, wobei in dem Aufbau eine Aufnahme für ein Rohr, ein Antrieb zum Fördern des Rohrs, eine Richteinrichtung zum Richten des Rohrs und eine Schneideinrichtung zum Schneiden des Rohrs vorgesehen sind.

Gemäß einem Aspekt der vorliegenden Erfindung gilt es, ein Transportsystem zu schaffen, welches den Transport von Rohren mit beliebiger Länge und mit der erforderlichen Qualität zum Ort der Verwendung des Rohrs ermöglicht.

### ZUSAMMENFASSUNG

Daher wird ein Transportsystem für ein Rohr aus einem kaltverfestigten Edelstahl vorgeschlagen mit einer Transportplattform, einer Aufnahme wobei auf der Aufnahme das Rohr aufgecoilt aufgenommen ist, einem Antrieb, wobei der Antrieb derart eingerichtet ist, dass mit dem Antrieb das Rohr in einer Transportrichtung förderbar ist und einer Richteinrichtung, wobei die Richteinrichtung derart eingerichtet ist, dass das Rohr mit der Richteinrichtung richtbar ist, und einer Schneideinrichtung, wobei die Schneideinrichtung derart eingerichtet und angeordnet ist, dass das Rohr mit der Schneideinrichtung durchtrennbar ist, so dass ein Rohrabschnitt mit einer auswählbaren Länge herstellbar ist, wobei die Aufnahme, der Antrieb, die Richteinrichtung und die Schneideinrichtung derart auf der Transportplattform angeordnet sind, dass mit dem Antrieb das Rohr automatisiert von der Aufnahme abziehbar und der Richteinrichtung und der Schneideinrichtung zuführbar ist, wobei das Transportsystem einen Transportcontainer umfasst, wobei die Transportplattform der Boden des Transportcontainers ist oder die Transportplattform auf einem Boden des Transportcontainers aufgenommen ist, und wobei das Transportsystem vier Seitenwände und ein Dach aufweist, wobei in einer der Seitenwände eine verschließbare Entnahmeöffnung vorgesehen ist, so dass durch die Entnahmeöffnung ein Rohrabschnitt aus dem Transportsystem entnehmbar ist, wobei die Aufnahme, der Antrieb, die Richteinrichtung und die Schneideinrichtung derart angeordnet sind, dass ein Rohrabschnitt durch die Entnahmeöffnung ausstoßbar ist.

Die diesem Transportsystem zu Grunde liegende Idee ist es, ein Transportsystem für ein gecoiltes Rohr mit einer im Wesentlichen beliebigen, nur durch das Volumen des Coils begrenzten Länge bereitzustellen. Ein gecoiltes Rohr entspricht allerdings zumindest im Hinblick auf seine Geradheit typischerweise nicht den Kundenanforderungen. Daher ermöglicht das Transportsystem eine automatisierte Endverarbeitung des Rohrs am Ort der Verwendung des Rohrs, d.h. bei dem Kunden. Dies ermöglicht es, das Transportsystem für das Rohr von dem Rohrhersteller bereitstellen zu lassen, wobei dieser beispielsweise die Verantwortung für die Endverarbeitung beim Kunden übernimmt, wobei der Kunde von der Transportplattform nur fertige Rohrabschnitte der gewünschten Länge und Qualität entnimmt. Die Endbearbeitung erfolgt in einer Ausführungsform vollständig automatisiert.

Das Transportsystem weist zudem ein Schneideinrichtung auf, wobei die Schneideinrichtung derart eingerichtet und angeordnet ist, dass das Rohr mit der Schneideinrichtung durchtrennbar ist, so dass ein Rohrabschnitt mit einer auswählbaren Länge herstellbar ist, und wobei die Aufnahme, der Antrieb, die Richteinrichtung und die Schneideinrichtung derart auf der Transportplattform angeordnet sind, dass mit dem Antrieb das Rohr automatisiert von der Aufnahme abziehbar und der Richteinrichtung und der Schneideinrichtung zuführbar ist.

Eine Transportplattform ist ein Träger, der eine ausreichende Stabilität für die Aufnahme der weiteren Elemente des Transportsystems aufweist, wobei diese Stabilität auch bei einem Transport, z.B. mit einem Lastkraftwagen, von einem Ort zu einem anderen Ort gegeben ist.

Entscheidend ist, dass die Transportplattform in einer Ausführungsform selbst kranbar und/oder förderbar ist oder mit einer Einrichtung, beispielweise dem Boden eines Abrollbehälters oder eines Transportcontainers, verbunden ist, die wiederum kran oder förderbar ist. In einer Ausführungsform der vorliegenden Offenbarung ist die Transportplattform beispielsweise mit einem Flurfördergerät oder einem Containerumschlaggerät transportierbar und auf einem Verkehrsmittel, wie zum Beispiel einem Lastkraftwagen oder einem Eisenbahnwaggon, aufnehmbar. In einer Ausführungsform weist die Transportplattform oder die mit ihre verbundene Einrichtung die zum Kranen und oder Fördern erforderlichen Einrichtungen auf. In einer Ausführungsform weist die Transportplattform oder die mit ihre verbundene Einrichtung Kranösen zum Befestigen von Hebezeug und/oder Ausnehmungen zum Aufnehmen der Zinken eines Flurfördergeräts auf.

Das Transportsystem weist zudem vier Seitenwände und ein Dach auf. Dabei sind in die vier Seitenwände und das Dach in einer Ausführungsform mit der Transportplattform verbunden und bilden zusammen einen Transportbehälter, wobei die Transportplattform den Boden des Transportbehälters bildet. In einer weiteren Ausführungsform wird ein Transportbehälter von den vier Seitenwänden, dem Dach und einem zusätzlichen Boden gebildet, wobei die Transportplattform im Inneren des Transportbehälters auf dem Boden aufgenommen und vorzugsweise mit diesem verbunden ist. Die Seitenwände und das Dach ermöglichen es, das Rohr vor Umwelteinflüssen geschützt zu transportieren. Ebenfalls bieten die Seitenwände und das Dach den übrigen Einrichtungen der Transportplattform Schutz.

Eine derartige Lösung ermöglicht es auch, das gecoilte Rohr sowie die Einrichtungen im Inneren des Transportbehälters dem Zugriff des Kunden vollständig zu entziehen. In einem Szenario liefert der Rohrhersteller ein gecoiltes Rohr in einem verschlossenen Transportbehälter des offenbarungsgemäßen Transportsystems und der Kunde entnimmt dem Transportbehälter automatisiert das Rohr und in einer Ausführungsform automatisiert Rohrabschnitte der jeweils erforderlichen Länge.

In einer Ausführungsform ist in einer der Seitenwände oder in dem Dach eine verschließbare Beschickungsöffnung zum Beschicken des Transportsystems mit dem gecoilten Rohr vorgesehen.

Zudem ist in einer der Seitenwände eine verschließbare Entnahmeöffnung vorgesehen, so dass durch die Entnahmeöffnung das Rohr oder ein Rohrabschnitt aus dem Transportsystem entnehmbar ist, wobei die Aufnahme, der Antrieb, die Richteinrichtung und die Schneideinrichtung derart angeordnet sind, dass das Rohr oder ein Rohrabschnitt durch die Entnahmeöffnung ausstoßbar ist. Es versteht sich, dass die Entnahmeöffnung in Förderrichtung des Rohrs hinter der letzten Einrichtung auf der Transportplattform angeordnet ist.

Das Transportsystem umfasst einen Transportcontainer, beispielsweise einen 40 Fuß Container, insbesondere einen 40 Fuß ISO-Container, wobei die Transportplattform der Boden des Transportcontainers ist oder die Transportplattform auf einem Boden des Transportcontainers aufgenommen ist. Es versteht sich, dass in einer Ausführungsform der vorliegenden Offenbarung unter dem Boden des Transportcontainers noch ein Abrolluntersatz vorgesehen sein kann. Der Abrolluntersatz ermöglicht es, einen herkömmlichen Transportcontainer als Abrollbehälter mit einem entsprechend ausgerüsteten Lastkraftwagen zu transportieren und abzusetzen bzw. aufzunehmen. Dazu weist in einer Ausführungsform der Abrolluntersatz eine Öse zum Greifen des Abrollbehälters sowie optional mindestens eine Rolle unter dem Boden des Abrollbehälters auf.

Ein aufgecoiltes bzw. gecoiltes Rohr bezeichnet im Sinne der vorliegenden Anmeldung ein aufgewickeltes, d. h. im Wesentlichen kreisbogenförmig in einer oder mehreren Windungen gebogenes, Rohr.

Die Aufnahme für ein solches gecoiltes Rohr kann in einer Ausführungsform so ausgestaltet sein, dass auf ihr eine Trommel, beispielsweise aus Holz, aufnehmbar ist, wobei wiederum das Rohr auf die Trommel aufgecoilt ist. Auf eine Trommel können beinahe beliebige Längen von Rohren aufgecoilt werden.

Betrachtet man kaltumgeformte Rohre aus Edelstahl, so ist deren Länge zunächst durch die Länge und Masse der der Fertigung zu Grunde gelegten Luppen (Rohmaterial für den Kaltumformprozess, wie Kaltpilgerwalzen oder Kaltziehen) beschränkt. Allerdings können in dem Transportsystem gemäß der vorliegenden Offenbarung in einer Ausführungsform auch Längen bereitgestellt werden, die nicht mehr einstückig Stück durch Kaltumformen hergestellt werden können.

Daher werden in einer Ausführungsform vor dem Aufcoilen auf eine Trommel mehre durch Kaltumformung hergestellte Rohre zu einem einzigen langen Rohr miteinander verbunden. Dies hat den Vorteil, dass kontinuierlich und ohne Unterbrechung Rohrmaterial den Einrichtungen auf der Transportplattform, insbesondere dem Antrieb, der Richteinrichtung und optional der Schneideinrichtung, zugeführt werden können, ohne dass ein Eingreifen durch einen Benutzer erforderlich wäre.

Daher weist das Transportsystem ein gecoiltes Rohr auf, wobei das Rohr auf der Aufnahme aufgenommen ist. In einer Ausführungsform besteht das Rohr aus einer Mehrzahl von an ihren Stirnflächen miteinander verbundenen, kaltumgeformten Rohrabschnitten aus einem Edelstahl. Auf diese Weise lassen sich gecoilte Rohre mit einer Länge von bis zu 17.000 m liefern, die dann vor Ort in Rohrabschnitte mit den erforderlichen Längen geschnitten werden. In einer Ausführungsform der Offenbarung ist die Trommel mit dem darauf gecoilten Rohr Teil des Transportsystems.

Dabei kann die Verbindung mehrerer Rohre an ihren Stirnseiten zu einem langen Rohr, das dann gecoilt wird, auf ganz unterschiedliche Weisen erfolgen. In einer Ausführungsform der vorliegenden Offenbarung werden die einzelnen Rohre durch Orbitalschweißen miteinander verbunden. Zwar ändert das Verschweißen der einzelnen kaltumgeformten Rohrabschnitte die Eigenschaften des Rohrs im Bereich der Schweißstelle, allerdings kann die Schweißstelle bei der Entnahme von Rohrabschnitten aus dem Transportsystem herausgeschnitten werden und als Verschnitt der Wiederverwertung zugeführt werden. Alternativ können die Rohrenden zweier miteinander verbundener Rohre miteinander vercrimpt sein.

In einer Ausführungsform gemäß der vorliegenden Offenbarung umfasst das Transportsystem eine Schweißnahterkennungseinrichtung, welche ggf. in der Materialflussrichtung vor der Schneideinrichtung angeordnet ist. Dabei ist die Schweißnahterkennungseinrichtung derart eingerichtet und angeordnet, dass sie eine Schweißnaht zwischen zwei mit einander verbundenen Rohrabschnitten erkennt. Eine solche Erkennung einer Schweißnaht kann beispielsweise mit Hilfe einer Kamera und einer geeigneten Bildauswertungssoftware oder aber mit Hilfe eines Wirbelstromsensors erfolgen. In einer Ausführungsform ist die Steuerung mit der Schweißnahterkennungseinrichtung verbunden und derart eingerichtet, dass sie die Schneideinrichtung so steuert, dass diese die Schweißnaht aus dem Rohr herausschneidet.

In einer alternativen Ausführungsform der vorliegenden Offenbarung umfasst die Aufnahme für das Rohr eine Haspel, auf welche ein ohne Kern oder Trommel lose gecoiltes Rohr aufnehmbar ist. Ein solches ohne einen Kern oder Trommel gecoiltes Rohr wird auch als "Loose Coil" bezeichnet. Derartige Loose Coils können beispielsweise von einem Kunden immer wieder neu auf die Haspel aufgelegt werden, wenn das Material verbraucht ist.

In einer Ausführungsform der vorliegenden Offenbarung umfasst die Aufnahme für das Rohr neben der Haspel zum Auflegen eines Loose Coils eine Verstelleinrichtung, die einen Abzug des Rohrs von der Haspel in der Höhe des Einlaufs in die übrigen Einrichtungen des Transportsystems ermöglicht. Neben einer solchen Höhenverstellung kann die Aufnahme auch eine Verschwenkeinrichtung aufweisen, die es ermöglicht, die Wickelachse der Haspel zu verschwenken. Dabei ist in einer bevorzugten Ausführungsform die Wickelachse zum Auflegen des gecoilten Rohrs durch einen Benutzer im Wesentlichen horizontal und zum Abziehen des gecoilten Rohrs im Wesentlichen vertikal.

Das Rohr weist einen kaltumgeformten, d.h. kaltverfestigten, Edelstahl auf oder besteht aus diesem. In einer weiteren Ausführungsform ist das Rohr ein kaltverfestigtest Rohr, welches nach einer Kaltumformung nicht mehr geglüht wurde. In einer Ausführungsform der vorliegenden Offenbarung ist das Rohr ein Rohr aus einem Edelstahl für hohe Drücke, wobei die Wanddicke des Rohrs mindestens zweimal so groß ist wie der Innendurchmesser des Rohrs. Das Rohr ist Teil des Transportsystems.

Der Antrieb im Sinne der vorliegenden Offenbarung kann entweder ein in eines der anderen Elemente, insbesondere die Aufnahme, die Richteinrichtung oder die Schneideinrichtung, integrierter Antrieb sein, welcher den notwendigen Vorschub des Rohrs bewirkt, oder ein gesonderter Treiber, welcher dafür vorgesehen ist, den Vorschub zu bewirken.

Dabei kann in einer Ausführungsform der vorliegenden Offenbarung die Richteinrichtung, insbesondere ein Richtsatz, so ausgestaltet sein, dass der aktiv angetrieben ist, um den erforderlichen Vorschub zum Zuführen zu den einzelnen Einrichtungen, aber auch zum Abziehen des Rohrs von der Aufnahme bereitzustellen.

In einer weiteren Ausführungsform der vorliegenden Offenbarung ist der Antrieb Teil der Aufnahme, welcher dann bewirkt, dass die Aufnahme das Rohr abspult und den weiteren Einrichtungen zuführt.

In einer Ausführungsform der vorliegenden Offenbarung ist der Treiber ein Walzenförderer, wobei das zu fördernde Rohr zwischen mindestens zwei Walzen geführt wird, wobei die Walzen automatisiert angetrieben sind und in Reibeingriff mit dem Rohr sind, so dass eine Drehung der Walzen zu einem Vorschieben des Rohrs führt.

In einer weiteren Ausführungsform der vorliegenden Offenbarung umfasst die Richteinrichtung einen Richtsatz mit mindestens zwei Profilwalzen oder eine Schrägwalzenrichtmaschine.

Die Richteinrichtung dient dazu, das gecoilte Rohr wieder in eine gerade ausgestreckte Form mit der erforderlichen Geradheit zu bringen.

In einer weiteren Ausführungsform der vorliegenden Offenbarung umfasst die Schneideinrichtung eine Säge oder einen Abstechkopf, welche ein Durchtrennen des Rohrs ermöglichen. Auf diese Weise kann der Kunde dem Transportsystem Rohrabschnitte beinahe beliebiger Länge fertig entnehmen.

In einer weiteren Ausführungsform der vorliegenden Offenbarung weist die Schneideinrichtung eine Kühlung zum Kühlen einer Schnittfläche des Rohrs mit CO₂ auf. Eine derartige Kühlung ist vorteilhaft zum Bereitstellen von Schnittflächen mit hoher Qualität.

Es versteht sich, dass das Transportsystem über die notwendigen Einrichtungen, d. h. den Antrieb, die Richteinrichtung und optional die Schneideinrichtung, hinaus beliebige weitere Einrichtungen zur Be- bzw. Verarbeitung des Rohrs aufweisen kann.

So weist das Transportsystem in einer Ausführungsform der vorliegenden Offenbarung eine auf der Transportplattform angeordnete Markiereinrichtung, beispielsweise einen Drucker, zum Kennzeichnen eines Rohrabschnitts auf. Auf diese Weise können die dem Transportsystem entnommenen Rohrabschnitte eindeutig gekennzeichnet werden. Mögliche Informationen, die auf den Rohrabschnitt aufgebracht werden können, sind beispielsweise dessen Material und Länge.

In einer weiteren Ausführungsform der vorliegenden Offenbarung weist das Transportsystem eine auf der Transportplattform angeordnete Biegeeinrichtung zum definierten Biegen eines Rohrabschnitts auf. Die Biegeeinrichtung ermöglicht es, einen gerichteten und abgelängten Rohrabschnitt in die für die weitere Verarbeitung notwendige Form zu biegen. Eine derartige Biegeeinrichtung ist beispielsweise dann von Vorteil, wenn die aus dem Transportsystem entnommenen Rohrabschnitte in der Flugzeugfertigung eingesetzt werden sollen, wo die Rohrabschnitte vor dem Einbau eine gekrümmte Form mit einem definierten Krümmungsradius aufweisen müssen.

In einer weiteren Ausführungsform der vorliegenden Offenbarung weist das Transportsystem eine auf der Transportplattform angeordnete Stopfenschussanlage auf, wobei die Stopfenschussanlage derart eingerichtet und angeordnet ist, dass mit der Stopfenschussanlage eine Innenwand eines abgelängten Rohrabschnitts mit Hilfe eines durch den Rohrabschnitt zu schießenden Stopfens reinigbar ist. Auf diese Weise können Rückstände vom Durchtrennen des Rohrs von der Innenwand des Rohrabschnitts entfernt werden.

In einer weiteren Ausführungsform der vorliegenden Offenbarung weist das Transportsystem eine auf der Transportplattform angeordnete Entfettungseinrichtung zum Entfetten des Rohrs auf. Auf diese Weise können Ölrückstände, die typischerweise von vorangegangenen Herstellungsschritten des Rohrs herrühren, entfernt werden.

In einer weiteren Ausführungsform umfasst das Transportsystem eine Poliereinrichtung, die derart eingerichtet und angeordnet ist, dass mit der Poliereinrichtung ein Abschnitt des Rohrs, insbesondere eine Stirnfläche oder eine zylindrische Außenfläche, polierbar ist.

In einer Ausführungsform der Offenbarung umfasst das Transportsystem eine Einrichtung zum Entgraten der Enden des von der Schneideinrichtung durchtrennten Rohrs.

In einer weiteren Ausführungsform weist das Transportsystem eine Konfektioniereinrichtung auf, die derart eingerichtet und angeordnet ist, dass damit zumindest ein Ende eines Rohrabschnitts derart konfektionierbar ist, dass der Rohrabschnitt mit einem anderen Rohrabschnitt verbindbar ist. Beispielsweise weist in einer Ausführungsform der vorliegenden Offenbarung das Transportsystem eine Konfektioniereinrichtung auf, wobei die Konfektioniereinrichtung derart eingerichtet und angeordnet ist, dass mit der Konfektioniereinrichtung an mindestens einem Ende eines Rohrabschnitts eine Schneidringverschraubung montierbar ist.

Das Transportsystem gemäß der vorliegenden Offenbarung weist für den Kunden des Rohrs den Vorteil auf, dass dieser dem Transportsystem gerichtete Rohrabschnitte mit einer von dem Kunden vorgegebenen Länge entnehmen kann. Dabei muss sich der Kunde in einer Ausführungsform weder um den Transport noch um die letzten Fertigungsschritte wie Richten und Schneiden kümmern.

Für den Hersteller des Rohrs weist das Transportsystem gemäß einer Ausführungsform der vorliegenden Offenbarung den Vorteil auf, dass er die letzten Fertigungsschritte wie Richten und Schneiden in den Produktionsprozess des Kunden integriert.

In einer Ausführungsform des Transportsystems weist das Transportsystem eine mit der Aufnahme und/oder dem Antrieb und/oder der Schneideinrichtung wirksam verbundene elektronische Steuerung auf, wobei die Steuerung derart eingerichtet ist, dass die Steuerung in einem Betrieb des Transportsystems Daten von der Aufnahme und/oder dem Antrieb und/oder der Schneideinrichtung empfängt und/oder Steuerbefehle an die Aufnahme und/oder den Antrieb und/oder die Schneideinrichtung ausgibt. Es versteht sich, dass die elektronische Steuerung in einer Ausführungsform einen Prozessor, insbesondere einen Rechner, aufweist.

In einer weiteren Ausführungsform der vorliegenden Offenbarung umfasst die Steuerung eine mit einem Datennetzwerk verbindbare Kommunikationsschnittstelle, wobei die Kommunikationsschnittstelle derart eingerichtet ist, dass mit der Kommunikationsschnittstelle Daten von dem Transportsystem an einen Server und/oder von einem Server zu dem Transportsystem übertragbar sind. Es versteht sich, dass in einer Ausführungsform das Datennetzwerk das Internet ist.

Mit dem Transportsystem gemäß der vorliegenden Offenbarung schließt der Rohrhersteller ggf. unmittelbar an den Produktionsprozess seines Kunden an. Mithilfe der Steuerung lassen sich Daten von den einzelnen Einrichtungen des Transportsystems aber auch von dem in ihm aufgenommenen Rohr erfassen und über die Kommunikationsschnittstelle in den Fertigungsprozess des Rohrherstellers und in den Fertigungsprozess des Kunden einspeisen.

In einer Ausführungsform erfasst die Steuerung, welche Rohrlängen eines auf der Aufnahme aufgenommenen gecoilten Rohrs vom Kunden dem Transportsystem entnommen wurden und die Steuerung löst über die Schnittstelle eine Nachbestellung aus, sobald erkennbar ist, wann das auf der Aufnahme aufgenommene Rohr verbraucht ist.

Auch lässt sich mit Hilfe der Steuerung und der Kommunikationsschnittstelle eine Abrechnung der vom Kunden aus dem Transportsystem entnommenen Menge an Rohr ermitteln und eine Abrechnung auslösen.

Andererseits kann der Kunde über die Kommunikationsschnittstelle beispielsweise die Länge eines als nächstes bereitzustellenden Rohrabschnitts an die Steuerung übermitteln, so dass das Transportsystem die gewünschte Länge eines Rohrabschnitts bereitstellt und ausstößt. Ferner kann über die Steuerung und die Kommunikationsschnittstelle unmittelbar die Übermittlung eines Zertifikats oder Zeugnisses über die Qualität und Güte eines aus dem Transportsystem entnommenen Rohrabschnitts an den Kunden erfolgen, so dass dieser automatisiert seine Dokumentation über die verbauten Rohrabschnitte erstellen kann.

Das Transportsystem gemäß der vorliegenden Offenbarung ermöglicht damit eine direkte Verzahnung zwischen der Fertigung des Rohrherstellers und der Weiterverarbeitung des Rohrs durch den Kunden.

Es versteht sich, dass in einer Ausführungsform der vorliegenden Offenbarung die Kommunikationsschnittstelle eine Netzwerkschnittstelle zur Anbindung an ein LAN oder ein Drahtlos-LAN ist. Insbesondere aber ist die Kommunikationsschnittstelle in einer Ausführungsform eine Mobilfunkschnittstelle, beispielsweise auf Grundlage des LTE-Standards.

Darüber hinaus weist in einer Ausführungsform der vorliegenden Offenbarung die Steuerung eine elektronische Ausleseeinrichtung zum berührungslosen Auslesen eines Datenträgers auf.

Dabei ist im Sinne der vorliegenden Anmeldung der Begriff Datenträger breit zu verstehen. Beispiele für einen solchen berührungslos auslesbaren Datenträger sind ein RFID-Tag oder auch ein Barcode. Eine solche elektronische Ausleseeinrichtung ermöglicht in einer Ausführungsform eine automatisierte Erfassung des auf der Aufnahme aufgenommenen Rohrmaterials.

Dazu weist das Transportsystem in einer Ausführungsform eine Trommel für das gecoilte Rohr, insbesondere eine Trommel mit dem gecoilten Rohr, auf, wobei die Trommel auf der Aufnahme aufgenommen ist und wobei die Trommel mit einem berührungslos auslesbaren Datenträger versehen ist, der von der Ausleseeinrichtung der Steuerung auslesbar ist. Nach dem Beschicken des Transportsystems mit der Trommel, vorzugsweise der Trommel mit dem gecoilten Rohr, hat die Steuerung automatisch die Information verfügbar, welchen Typ von Rohr das Transportsystem dem Kunden bereitstellen kann.

In einer weiteren Ausführungsform der vorliegenden Offenbarung weist das Transportsystem ein gecoiltes Rohr auf, wobei das Rohr auf der Aufnahme aufgenommen ist und wobei das Rohr mit einem berührungslos auslesbaren Datenträger versehen ist, der von der Ausleseeinrichtung auslesbar ist. Bei einer derartigen Ausführungsform ist es möglich, die Bestimmung des Typs von Rohr, der in dem Transportsystem aufgenommen ist und der dem Kunden zur Verfügung gestellt werden kann, nicht mittelbar oder nicht ausschließlich mittelbar über die Trommel für das gecoilte Rohr bereitzustellen, sondern unmittelbar durch eine Kennzeichnung des Rohrs selbst. Es versteht sich, dass der berührungslos auslesbare Datenträger beispielsweise in das Rohr integriert sein kann. In einer Ausführungsform der vorliegenden Offenbarung ist der berührungslos auslesbare Datenträger außen auf dem Mantel des Rohrs aufgebracht. Erfolgt das Aufbringen des berührungslos auslesbaren Datenträgers in einem Endabschnitt des Rohrs, so kann dieser Endabschnitt zu Beginn abgeschnitten werden, so dass der Datenträger die weiteren Verarbeitungsprozesse nicht stört.

Darüber hinaus wird ein Verfahren zum Ausliefern eines Rohrs vorgeschlagen mit den Schritten Aufcoilen des Rohrs, Aufnehmen des Rohrs auf einer auf einer Transportplattform angeordneten Aufnahme, Transportieren der Transportplattform von einem ersten Ort an einen zweiten Ort, Fördern des Rohrs mit einem auf der Transportplattform angeordneten Antrieb in einer Transportrichtung, so dass das Rohr automatisiert von der Aufnahme abgezogen und einer Richteinrichtung zugeführt wird und Richten des Rohrs der auf der Transportplattform angeordneten Richteinrichtung, Fördern des Rohrs, so dass das Rohr einer Schneideinrichtung zugeführt wird, und Durchtrennen des Rohrs mit der auf der Transportplattform angeordneten Schneideinrichtung, so dass ein Rohrabschnitt mit einer ausgewählten Länge hergestellt wird, wobei das Transportsystem einen Transportcontainer umfasst, wobei die Transportplattform der Boden des Transportcontainers ist oder die Transportplattform auf einem Boden des Transportcontainers aufgenommen ist, und wobei das Transportsystem vier Seitenwände und ein Dach aufweist, wobei in einer der Seitenwände eine verschließbare Entnahmeöffnung vorgesehen ist, so dass durch die Entnahmeöffnung ein Rohrabschnitt aus dem Transportsystem entnehmbar ist, wobei die Aufnahme, der Antrieb, die Richteinrichtung und die Schneideinrichtung derart angeordnet sind, dass ein Rohrabschnitt durch die Entnahmeöffnung ausgestoßen wird.

Soweit im vorstehend und im folgenden Aspekte der vorliegenden Offenbarung im Hinblick auf das Transportsystem beschrieben werden, so gelten diese auch für das entsprechende Verfahren zum Ausliefern eines Rohrs und umgekehrt. Soweit das Verfahren mit einem Transportsystem gemäß dieser Offenbarung ausgeführt wird, so weist diese die entsprechenden Einrichtungen hierfür auf. Insbesondere sind Ausführungsformen des Transportsystems zum Ausführen des Verfahrens geeignet.

Es ist zu bemerken, dass die zuvor genannten Verfahrensschritte nicht notwendigerweise in der angegebenen Reihenfolge durchlaufen werden müssen. So ist es denkbar, dass zunächst die Transportplattform transportiert wird und dann das gecoilte Rohr auf der Aufnahme aufgenommen wird. Ebenso ist es aber möglich, dass zunächst das gecoilte Rohr auf der Aufnahme aufgenommen wird und dann die Transportplattform mit dem Rohr transportiert wird.

Auch können in einer Ausführungsform die Schritte des Richtens und des Durchtrennens getauscht werden, insbesondere dann, wenn Rohrabschnitte mit kurzen Längen gefertigt werden.

In einer Ausführungsform werden das Fördern, das Richten und optional das Schneiden von einer gemeinsamen Steuerung gesteuert, wobei die Steuerung Daten erfasst, die ein Maß für die von der Aufnahme abgezogene Länge des Rohrs sind, und wobei die Steuerung die Daten über eine Kommunikationsschnittstelle und ein Datennetzwerk an einen Server überträgt.

Weitere Vorteile, Merkmale und Anwendungsmöglichkeiten der vorliegenden Erfindung werden anhand der folgenden Beschreibung von Ausführungsformen und der dazugehörigen Figuren deutlich. Die vorhergehende allgemeine Beschreibung sowie die folgende detaillierte Beschreibung von Ausführungsformen sind besser verständlich, wenn sie im Zusammenhang mit den beigefügten Zeichnungen gelesen werden. Es ist zu beachten, dass die gezeigten Ausführungsformen nicht auf die genauen Anordnungen und Mittel beschränkt sind.

### KURZBESCHREIBUNG DER FIGUREN

- Figur 1: ist eine teilweise weggebrochene perspektivische Darstellung eines Transportsystems gemäß einer Variante der vorliegenden Offenbarung.
- Figur 2: ist eine teilweise weggebrochene perspektivische Darstellung einer weiteren Variante eines Transportsystems gemäß der vorliegenden Offenbarung.
- Figur 3: ist eine Seitenansicht des Transportsystems aus Figur 2 beim Aufnehmen auf einen Lastkraftwagen.
- Figur 4: ist eine perspektivische Ansicht von schräg oben der Einrichtungen im Inneren eines Transportbehälters, so wie sie Bestandteil eines Transportsystems gemäß einer Variante der vorliegenden Offenbarung sind.
- Figur 5: ist eine schematische Darstellung der Steuerung eine Transportsystems gemäß Figur 2

### FIGURENBESCHREIBUNG

In den Figuren sind gleiche Elemente mit gleichen Bezugszeichen bezeichnet.

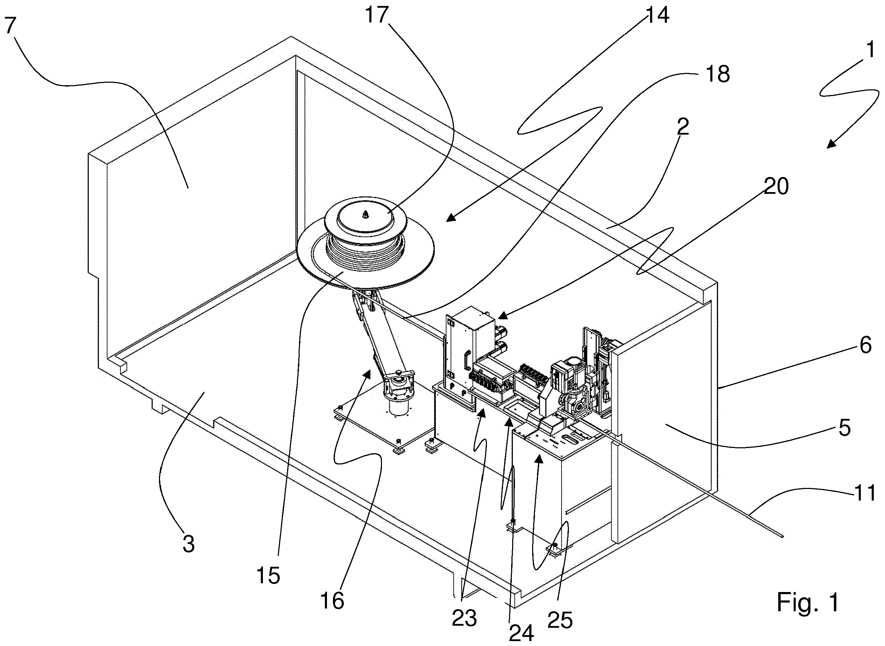

Die Transportsysteme 1, 1', 1" in den Figuren 1 bis 4 basieren alle jeweils auf einem 40 Fuß ISO-Überseecontainer 2, so wie er teilweise transparent in den Figuren 1 bis 3 gezeigt ist.

Der Container 2 weist jeweils eine Transportplattform in Form des Bodens 3 des Containers 2, vier Seitenwände 4, 5, 6, 7 und ein Dach 8 auf. In einer der Längswände 4 ist eine Tür 37 vorgesehen, welche eine Beschickungsöffnung 9 verschließt. Zudem ist die Stirnwand 5 in Form einer doppelflügligen Tür ausgestaltet, so wie dies bei Überseecontainern üblich ist. In der Stirnwand 5 ist zudem eine Entnahmeöffnung 10 vorgesehen, durch welche Rohrabschnitte 11 aus dem Container 2 entnehmbar sind. Es versteht sich, dass die Entnahmeöffnung 10 mit Hilfe eines Deckels verschließbar ist, um das Innere des Containers 2 während des Transports vollständig gegenüber Umwelteinflüssen zu schützen.

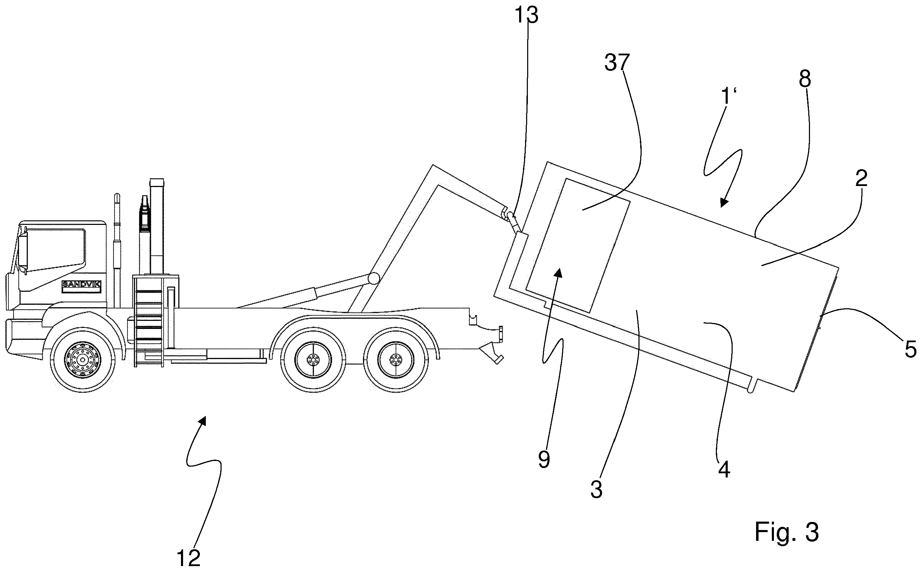

In der dargestellten Ausführungsform ist der Container zusätzlich auf einem Abrolladapter aufgenommen, so dass der Container mit Hilfe eines dafür ausgestatteten Lastkraftwagens 12, so wie er beispielhaft in Figur 3 gezeigt ist, transportierbar und punktgenau absetzbar ist. Ein solcher Abrolladapter weist den gleichen Aufnahmehaken 13 sowie Rollen (in den Figuren nicht dargestellt) auf, so wie sie von Abrollbehältern bekannt sind.

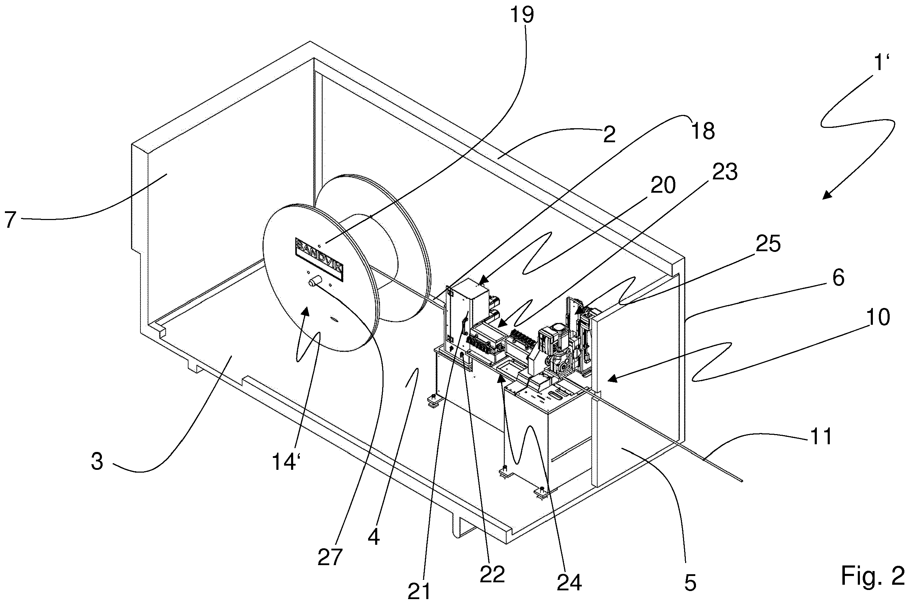

Neben dem Container 2 umfasst das Transportsystem 1, 1', 1" jeweils Einrichtungen im Inneren des Containers 2. Grundlage für den Transport bzw. die Auslieferung eines Rohrs 18 ist jeweils die Aufnahme 14 bzw. 14' für das gecoilte Rohr. Die Varianten der Figuren 1 und 2 unterscheiden sich durch die Ausgestaltung der Aufnahme 14, 14' für das gecoilte Rohr.

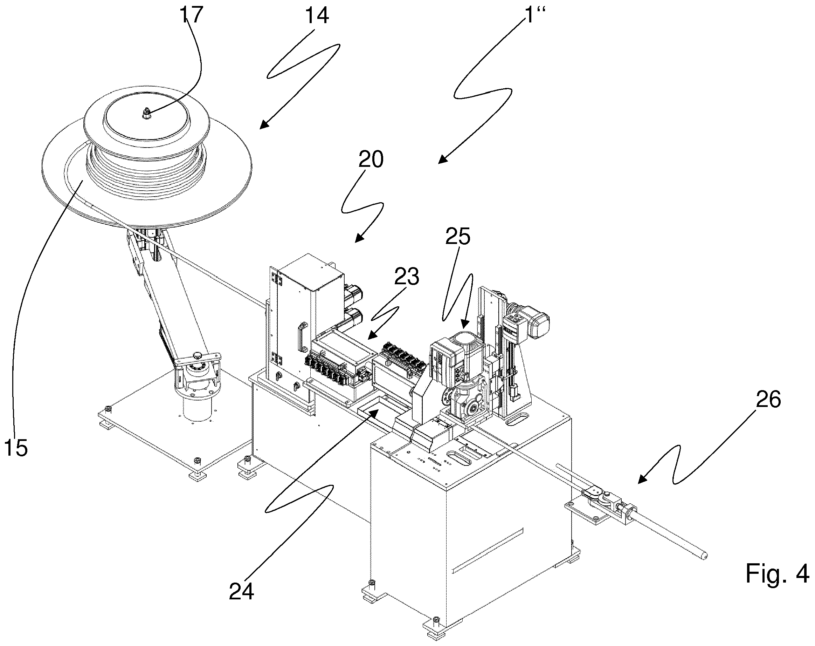

Bei dem Transportsystem 1 aus Figur 1 ist die Aufnahme 14 eine Haspel 15 zum Auflegen eines sogenannten Loose Coils, d. h. eines gecoilten Rohrs, welches ohne einen Kern gecoilt wurde. Die Haspel 15 ist Bestandteil der Aufnahme 14 und wird auch bei einem Nachlegen von Rohrmaterial typischerweise nicht gewechselt. Die Aufnahme 14 umfasst darüber hinaus eine Verschwenkeinrichtung 16, welche ermöglicht, die Haspel 15 sowohl in der Höhe als auch in der Ausrichtung ihrer Drehachse 17 zu justieren. Die Höhe der Haspel 15 wird auf die Höhe des Einlaufs für das Rohr 18 in die weiteren Einrichtungen des Transportsystems 1 angepasst. Zum Auflegen des Loose Coils auf die Haspel 15 kann deren Drehachse 17 so verschwenkt werden, dass die Drehachse 17 im Wesentlichen horizontal ausgerichtet ist (in den Figuren nicht gezeigt), so dass es für einen Benutzer einfach ist, das Loose Coil auf die Haspel zu hängen. Danach wird die Haspel so verschwenkt, dass ihre Drehachse 17 im Wesentlichen vertikal ist (wie in Figuren 1 und 4 gezeigt).

Die Aufnahme 14' für das gecoilte Rohr der Variante aus Figur 2 hat ein zweiteiliges Aufnahmelager 27 für eine Trommel 19 mit dem darauf gecoilten Rohr 18. In der Variante mit einer derartigen Trommel 19 können beinahe beliebige Rohrlängen dem Kunden mit Hilfe des Transportsystems 1' bereitgestellt werden. Die Länge des Rohrs ist letztlich nur durch das Volumen der Trommel 19 begrenzt.

Bei den gezeigten Varianten des Transportsystems 1, 1' handelt es sich jeweils um ein Transportsystem für ein Rohr aus einem Edelstahl, welches durch Kaltumformung hergestellt wurde. Die langen Rohrlängen auf der Trommel 19 werden durch Orbitalverschweißen mehrerer Rohre an ihren Stirnflächen hergestellt. Durch das Verschweißen werden die Materialeigenschaften der kaltverfestigte Rohre in der Umgebung der Schweißstelle allerdings negativ verändert. Daher müssen diese vor dem Ausstoßen der Rohrabschnitte für den Kunden aus dem Rohr 18 herausgeschnitten werden und stellen Verschnitt dar, welcher der Wiederverwertung zuzuführen ist.

Das Rohr 18 ist in beiden Varianten der Figuren 1 und 2 in einen Treiber 20 als Antrieb im Sinne der vorliegenden Offenbarung eingeführt. Insbesondere bei den langen Rohrlängen, sowie sie auf der Trommel 19 der Figur 2 bereitgestellt werden, sind bereits bei der Anlieferung des Transportsystems 1, 1` beim Kunden die Rohrenden des Rohrs 18 in den Treiber 20 eingeführt. Die Endfertigung der Rohrabschnitte 11 kann unmittelbar beginnen. Bei dem Treiber 20 handelt es sich in der gezeigten Variante um einen Walzentreiber mit zwei Walzen 21, 22, die motorisch angetrieben sind und in Reibeingriff mit dem Rohr 18 stehen, so dass das Rohr 18 im Betrieb einen Vortrieb auf die Entnahmeöffnung 10 hin erfährt.

In Vorschubrichtung hinter dem Treiber 20 ist ist eine Richteinrichtung in Form eines Richtsatzes 23, 24 mit einer Mehrzahl von Profilwalzen vorgesehen. Dabei hat der Richtsatz zwei Sätze 23, 24 von Walzen, wobei die Drehachsen der Walzen des ersten Satzes 23 senkrecht zu den Drehachsen der Walzen des zweiten Satzes 24 stehen. Die Richteinrichtung 24 dient dazu, das Rohr 18, welches durch das Coilen eine Krümmung seiner Flächen erhalten hat, mit der notwendigen Geradheit zu versehen.

In der Förderrichtung hinter der Richteinrichtung 23, 24 ist eine Schneideinrichtung in Form eines Abstechkopfes, welcher motorisch angetrieben um das Rohr 18 rotiert und dieses durchtrennt, vorgesehen. Nach dem Abstechen mit Hilfe der Schneideinrichtung 25 kann der Rohrabschnitt 11 in der gewünschten Geradheit und Länge dem Transportsystem 1, 1' entnommen werden.

Figur 4 zeigt eine weitere Variante der Einrichtungen im Inneren des Containers 2, wobei der Container 2 der Einfachheit halber in Figur 4 nicht dargestellt ist. Wie die Variante aus Figur 1 weist auch das Transportsystem aus Figur 4 wieder eine Aufnahme für ein gecoiltes Rohr in Form eines Loose Coils auf. Zusätzlich zu dem Treiber 20, dem Richtsatz 23, 24 und der Abstecheinrichtung 25 weist die Variante der Einrichtungen des Transportsystems 1" aus Figur 4 eine Biegeeinrichtung 26 auf, welche die einzelnen Rohrabschnitte nach dem Abstechen mit Hilfe der Schneideinrichtung 25 so biegt, dass die Rohrabschnitte danach unmittelbar weiterverarbeitet, d. h. beispielsweise in Industriemaschinen eingebaut, werden können.

Anhand der Variante des Transportsystems 1' aus Figur 2 wird nun der Betrieb des Transportsystems 1' kurz skizziert. In der Fertigung des Rohrherstellers wird der Container 2 mit einem auf die Trommel 19 aufgecoilten Rohr 18 beschickt. Der verschlossene Container 2 wird dann zum Kunden für das Rohr 18 transportiert. Für den Transport kann der Lastkraftwagen 12 aus Figur 3zum Einsatz kommen, der Container 2 kann jedoch auch auf die Eisenbahn oder ein Schiff verladen werden. Am Ort der Fabrikation des Kunden, dies kann eine Werkshalle oder auch eine Baustelle sein, wird der Container 2 abgesetzt und die letzten Auslieferungsschritte können unmittelbar beginnen. Der Treiber 21 zieht dabei so viel Rohr 18 von der Trommel 19 ab, wie für den jeweils zu entnehmenden Rohrabschnitt 11 benötigt wird. Der Kunde erhält einen Rohrabschnitt 11 mit einer Länge und Qualität gemäß seiner Vorgabe.

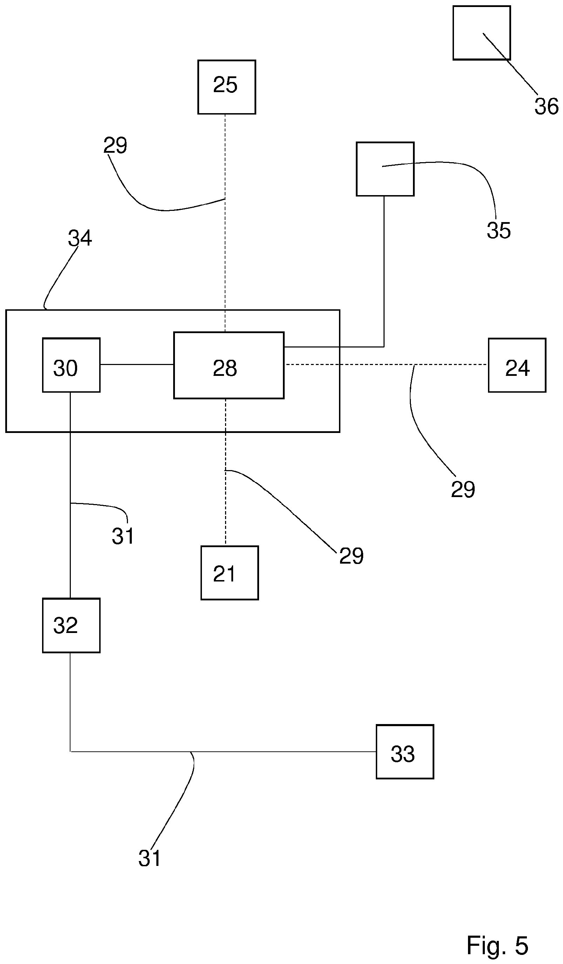

Figur 5 zeigt in einem schematischen Diagramm wie das Transportsystem 1' eine Brücke zwischen der Fertigung des Rohrherstellers und der Weiterverarbeitung durch den Kunden schlägt. Das Transportsystem 1' weist dazu eine Steuerung 34 mit einem Rechner 28 auf. Dieser Rechner 28 (in den Figuren 1 bis 3 nicht gezeigt) ist über entsprechende Datenleitungen 29 mit den einzelnen Einrichtungen des Containers 2, nämlich der Aufnahme 14`, dem Treiber 21, und dem Abstechkopf 25 verbunden. Der Rechner 28 übernimmt nun die Steuerung sämtlicher weiteren Auslieferungsschritte, bis nach dem abstechen der Rohrabschnitt 11 durch die Entnahmeöffnung 10 aus dem Container 2 entnommen werden kann.

Zusätzlich erhält der Rechner 28 über die Datenleitungen 29 aber auch Informationen über den Betriebszustand der einzelnen Einrichtungen 21, 24, 25. Aus diesen Informationen des Betriebszustands kann der Rechner 28 ableiten, wie viele Meter des Rohrs 18 bereits von der Trommel 19 abgezogen und in geschnittener Form dem Container 2 entnommen wurden. Da die Steuerung neben dem Rechner 28 auch eine mit dem Rechner 28 verbundene Mobilfunkschnittstelle 30 aufweist, ist der Rechner 28 in der Lage über das Internet 31 mit einem Server 32 des Rohrherstellers zu kommunizieren. Der Server 32 wiederum ist über das Internet mit einem Rechner 33 des Kunden verbunden. Auf diese Weise kann das Server 32 des Rohrherstellers automatisiert Rechnungen über die dem Container 2 entnommenen Längen des Rohrs 18 erstellen. Zudem können Zertifikate für die einzelnen Rohrabschnitt 11 automatisiert an den Kunden übermittelt werden. Stellt der Rechner 28 fest, dass innerhalb einer bestimmten Zeit die gesamte auf der Trommel 19 aufgenommene Länge des Rohrs 18 abgezogen sein wird, so löst der Rechner 28 über die Kommunikationsschnittstelle 30, das Internet 31 und den Server 32 des Rohrherstellers eine Nachbestellung für ein Rohr 18 des gleichen Typs aus. Dieses wird dann in time an den Kunden in einem neuen Container 2 ausgeliefert. Der anliefernde Lkw 12 kann dann am Ort des Kunden den leeren Container gegen den vollen Container austauschen.

Weiterhin ist der Rechner28 der Steuerung 34 mit einer elektronischen Ausleseeinrichtung in Form eines berührungslosen RFID-Lesers 35 verbunden. Der RFID-Leser 35 dient dazu, RFID-Tags 36 auszulesen, welche an der Trommel 19 angeordnet sind. Auf diese Weise kann das Transportsystem 1' automatisiert den Typ von Rohr 18 erfassen, welcher auf der Trommel 19 bereitgestellt wird. Die entsprechende Information ist in dem RFID-Tag 36 abgespeichert.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Offenbarung ist nicht auf die gezeigten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Bezugszeichen in den Ansprüchen sind nicht als Beschränkung des Schutzbereichs gedacht.

### Bezugszeichenliste

- 1, 1', 1": Transportsystem
- 2: Container
- 3: Boden des Container 2
- 4, 5, 6, 7: Seitenwand der Containers 2
- 8: Dach
- 9: Beschickungsöffnung
- 10: Entnahmeöffnung
- 11: Rohrabschnitt
- 12: Lastkraftwagen
- 13: Aufnahmehaken
- 14, 14`: Aufnahme für ein gecoiltes Rohr
- 15: Haspel
- 16: Verschwenkeinrichtung
- 17: Drehachse
- 18: Rohr
- 19: Trommel
- 20: Treiber
- 21, 22: Walzen des Treibers 20
- 23: erster Teil des Richtsatzes
- 24: zweiter Teil des Richtsatzes
- 25: Schneideinrichtung
- 26: Biegeeinrichtung
- 27: Aufnahmelager
- 28: Rechner
- 29: Datenleitung
- 30: Mobilfunkschnittstelle
- 31: Internet
- 32: Server des Rohrherstellers
- 33: Rechner des Kunden
- 34: Steuerung
- 35: RFID-Leser
- 36: RFID-Tag
- 37: Tür

## Patentansprüche

1. Transportsystem (1, 1', 1") für ein Rohr (18) mit
einer Transportplattform (3),
einer Aufnahme (14, 14'), wobei auf der Aufnahme (14, 14') das Rohr (18) aufgecoilt aufgenommen ist,
einem Antrieb (20), wobei der Antrieb (20) derart eingerichtet ist, dass mit dem Antrieb (20) das Rohr (18) in einer Transportrichtung förderbar ist, und
einer Richteinrichtung (24), wobei die Richteinrichtung (24) derart eingerichtet ist, dass das Rohr (18) mit der Richteinrichtung (24) richtbar ist, und
einer Schneideinrichtung (25), wobei die Schneideinrichtung (25) derart eingerichtet und angeordnet ist, dass das Rohr (18) mit der Schneideinrichtung (25) durchtrennbar ist, so dass ein Rohrabschnitt (11) mit einer auswählbaren Länge herstellbar ist,
wobei die Aufnahme (14, 14'), der Antrieb (20), die Richteinrichtung (24) und die Schneideinrichtung (25) derart auf der Transportplattform (3) angeordnet sind, dass mit dem Antrieb (20) das Rohr (18) automatisiert von der Aufnahme (14, 14') abziehbar und der Richteinrichtung (24) und der Schneideinrichtung (25) zuführbar ist,
**dadurch gekennzeichnet, dass**
das Rohr (18) ein Rohr (18) aus einem kaltverfestigten Edelstahl ist,
das Transportsystem (1, 1', 1") einen Transportcontainer umfasst, wobei die Transportplattform (3) der Boden des Transportcontainers ist oder die Transportplattform (3) auf einem Boden des Transportcontainers aufgenommen ist, und
das Transportsystem (1, 1', 1") vier Seitenwände (4, 5, 6, 7) und ein Dach (8) aufweist, wobei in einer der Seitenwände (4, 5, 6, 7) eine verschließbare Entnahmeöffnung (10) vorgesehen ist, so dass durch die Entnahmeöffnung (10) ein Rohrabschnitt (11) aus dem Transportsystem (1, 1', 1") entnehmbar ist, wobei die Aufnahme (14, 14'), der Antrieb (20), die Richteinrichtung (24) und die Schneideinrichtung (25) derart angeordnet sind, dass ein Rohrabschnitt (11) durch die Entnahmeöffnung (10) ausstoßbar ist.

2. Transportsystem (1, 1`, 1") nach dem vorhergehenden Anspruch, **dadurch gekennzeichnet, dass** die Transportplattform (3) zumindest kranbar oder förderbar ist oder dass die Transportplattform (3) mit einer weiteren Einrichtung verbunden ist, die zumindest kranbar oder förderbar ist.

3. Transportsystem (1, 1', 1") nach einem der vorhergehenden Ansprüche, **dadurch gekennzeichnet, dass** das Transportsystem (1, 1', 1") eine zumindest mit der Aufnahme (14, 14'), dem Antrieb (20) oder der Schneideinrichtung (25) wirksam verbundene elektronische Steuerung (34) aufweist, wobei die Steuerung (34) derart eingerichtet ist, dass die Steuerung (34) in einem Betrieb des Transportsystems (1, 1', 1") Daten von zumindest der Aufnahme (14, 14'), dem Antrieb (20) oder der Schneideinrichtung (25) empfängt und/oder Steuerbefehle Q an zumindest die Aufnahme (14, 14'), den Antrieb (20) oder die Schneideinrichtung (25) ausgibt.

4. Transportsystem (1, 1', 1") nach dem vorhergehenden Anspruch, **dadurch gekennzeichnet, dass** die Steuerung (34) eine Kommunikationsschnittstelle (30) umfasst, wobei die Kommunikationsschnittstelle (30) derart eingerichtet ist, dass mit der Kommunikationsschnittstelle (30) Daten von dem Transportsystem (1, 1', 1") über ein Datennetzwerk (31) an einen Server (32) übertragbar sind.

5. Transportsystem (1, 1', 1") nach Anspruch 3 oder 4, **dadurch gekennzeichnet, dass** die Steuerung eine elektronische Ausleseeinrichtung (35) zum berührungslosen Auslesen eines Datenträgers (36) aufweist.

6. Transportsystem (1, 1', 1") nach Anspruch 5, **dadurch gekennzeichnet, dass** das Transportsystem (1, 1', 1") eine Trommel (19) für das gecoilte Rohr (18) aufweist, wobei die Trommel (19) auf der Aufnahme (14, 14') aufgenommen ist und wobei die Trommel (19) mit einem berührungslos auslesbaren Datenträger (36) versehen ist, der von der Ausleseeinrichtung (35) auslesbar ist.

7. Transportsystem (1, 1', 1") nach Anspruch 5 oder 6, **dadurch gekennzeichnet, dass** das Transportsystem (1, 1', 1") ein gecoiltes Rohr (18) aufweist, wobei das Rohr (18) auf der Aufnahme (14, 14') aufgenommen ist und wobei das Rohr (18) mit einem berührungslos auslesbaren Datenträger versehen ist, der von der Ausleseeinrichtung auslesbar ist.

8. Transportsystem (1, 1', 1") nach einem der vorhergehenden Ansprüche, **dadurch gekennzeichnet, dass** das Rohr (18) aus einer Mehrzahl von an ihren Stirnflächen miteinander verbundenen, kaltumgeformten Rohrabschnitten aus einem Edelstahl besteht.

9. Transportsystem (1, 1', 1") nach einem der vorhergehenden Ansprüche, **dadurch gekennzeichnet, dass** das Transportsystem (1, 1', 1") eine auf der Transportplattform (3) angeordnete Markiereinrichtung zum Kennzeichnen eines Rohrabschnitts (11) aufweist.

10. Transportsystem (1, 1', 1") nach einem der vorhergehenden Ansprüche, **dadurch gekennzeichnet, dass** das Transportsystem (1, 1', 1") eine auf der Transportplattform (3) angeordnete Biegeeinrichtung (26) zum definierten Biegen eines Rohrabschnitts (11) aufweist.

11. Transportsystem (1, 1', 1") nach einem der vorhergehenden Ansprüche, **dadurch gekennzeichnet, dass** das Transportsystem (1, 1', 1") eine auf der Transportplattform (3) angeordnete Entfettungseinrichtung zum Entfetten des Rohrs aufweist.

12. Transportsystem (1, 1', 1") nach einem der vorhergehenden Ansprüche, **dadurch gekennzeichnet, dass** das Transportsystem (1, 1', 1") eine auf der Transportplattform (3) angeordnete Konfektioniereinrichtung aufweist, wobei die Konfektioniereinrichtung derart eingerichtet und angeordnet ist, dass mit der Konfektioniereinrichtung an mindestens einem Ende eines Rohrabschnitts eine Schneidringverschraubung montierbar ist.

13. Verfahren zum Ausliefern eines Rohrs (18) mit den Schritten
Aufcoilen des Rohrs (18),
Aufnehmen des Rohrs (18) auf einer auf einer Transportplattform (3) angeordneten Aufnahme (14, 14'),
Transportieren der Transportplattform (3) von einem ersten Ort an einen zweiten Ort,
Fördern des Rohrs (18) mit einem auf der Transportplattform (3) angeordneten Antrieb (20) in einer Transportrichtung, so dass das Rohr (18) automatisiert von der Aufnahme (14, 14') abgezogen und einer Richteinrichtung (24) zugeführt wird, Richten des Rohrs (18) mit der auf der Transportplattform (3) angeordneten Richteinrichtung (24),
Fördern des Rohrs (18), so dass das Rohr (18) einer Schneideinrichtung (25) zugeführt wird, und
Durchtrennen des Rohrs (18) mit der auf der Transportplattform angeordneten Schneideinrichtung (25), so dass ein Rohrabschnitt (11) mit einer ausgewählten Länge hergestellt wird,
**dadurch gekennzeichnet, dass**
das Rohr (18) ein Rohr (18) aus einem kaltverfestigten Edelstahl ist,
das Transportsystem (1, 1', 1") einen Transportcontainer umfasst, wobei die Transportplattform (3) der Boden des Transportcontainers ist oder die Transportplattform (3) auf einem Boden des Transportcontainers aufgenommen ist, und
das Transportsystem (1, 1', 1") vier Seitenwände (4, 5, 6, 7) und ein Dach (8) aufweist, wobei in einer der Seitenwände (4, 5, 6, 7) eine verschließbare Entnahmeöffnung (10) vorgesehen ist, so dass durch die Entnahmeöffnung (10) ein Rohrabschnitt (11) aus dem Transportsystem (1, 1', 1") entnehmbar ist, wobei die Aufnahme (14, 14'), der Antrieb (20), die Richteinrichtung (24) und die Schneideinrichtung (25) derart angeordnet sind, dass ein Rohrabschnitt (11) durch die Entnahmeöffnung (10) ausgestoßen wird.

14. Verfahren nach Anspruch 13, **dadurch gekennzeichnet, dass** das Fördern, das Richten und das Schneiden von einer gemeinsamen Steuerung gesteuert werden, wobei die Steuerung Daten erfasst, die ein Maß für die von der Aufnahme (14, 14') abgezogene Länge des Rohrs (18) sind, und wobei die Steuerung die Daten über eine Kommunikationsschnittstelle und ein Datennetzwerk an einen Server überträgt.

## Claims

1. Transport system (1, 1', 1") for a pipe (18), having
a transport platform (3),
a holding fixture (14, 14'), wherein the pipe (18) is coiled up on the holding fixture (14, 14'),
a drive (20), wherein the drive (20) is configured such that the pipe (18) can be conveyed in a transport direction by means of the drive (20), and
a straightening apparatus (24), wherein the straightening apparatus (24) is configured such that the pipe (18) can be straightened by means of the straightening apparatus (24),
a cutting apparatus (25), wherein the cutting apparatus (25) is configured and arranged such that the pipe (18) can be severed with the cutting apparatus (25), with the result that a pipe section (11) can be produced with a selectable length,
wherein the holding fixture (14, 14'), the drive (20), the straightening apparatus (24) and the cutting apparatus (25) are arranged on the transport platform (3) such that, by means of the drive (20), the pipe (18) can be drawn off the holding fixture (14) and fed to the straightening apparatus (24) and the cutting apparatus (25) in an automated manner,
**characterised in that**
the pipe (18) is a pipe (18) made of a cold-worked stainless steel,
the transport system (1, 1', 1") comprises a transport container, wherein the transport platform (3) is the floor of the transport container or the transport platform (3) is received on a floor of the transport container, and
the transport system (1, 1', 1") has four side walls (4, 5, 6, 7) and a roof (8), wherein a closable unloading opening (10) is provided in one of the side walls (4, 5, 6, 7), with the result that a pipe section (11) can be taken out of the transport system (1, 1', 1") through the unloading opening (10), wherein the holding fixture (14, 14'), the drive (20), the straightening apparatus (24) and the cutting apparatus (25) are arranged such that a pipe section (11) can be ejected through the unloading opening (10).

2. Transport system (1, 1', 1") according to the preceding claim, **characterised in that** the transport platform (3) can be at least handled by crane or conveyed or **in that** the transport platform (3) is connected to a further apparatus which can be at least handled by crane or conveyed.

3. Transport system (1, 1', 1") according to any one of the preceding claims, **characterised in that** the transport system (1, 1', 1") has an electronic controller (34) effectively connected at least to the holding fixture (14, 14'), the drive (20) or the cutting apparatus (25), wherein the controller (34) is configured such that, during an operation of the transport system (1, 1', 1"), the controller (34) receives data from at least the holding fixture (14, 14'), the drive (20) or the cutting apparatus (25) and/or issues control commands () to at least the holding fixture (14, 14'), the drive (20) or the cutting apparatus (25).

4. Transport system (1, 1', 1") according to the preceding claim, **characterised in that** the controller (34) comprises a communications interface (30), wherein the communications interface (30) is configured such that data from the transport system (1, 1', 1") can be transmitted to a server (32) via a data network (31) using the communications interface (30).

5. Transport system (1, 1', 1") according to claim 3 or 4, **characterised in that** the controller has an electronic reading apparatus (35) for contactlessly reading a data carrier (36).

6. Transport system (1, 1', 1") according to claim 5, **characterised in that** the transport system (1, 1', 1") has a drum (19) for the coiled pipe (18), wherein the drum (19) is received on the holding fixture (14, 14') and wherein the drum (19) is provided with a contactlessly readable data carrier (36) which can be read by the reading apparatus (35).

7. Transport system (1, 1', 1") according to claim 5 or 6, **characterised in that** the transport system (1, 1', 1") has a coiled pipe (18), wherein the pipe (18) is received on the holding fixture (14) and wherein the pipe (18) is provided with a contactlessly readable data carrier which can be read by the reading apparatus.

8. Transport system (1, 1', 1") according to any one of the preceding claims, **characterised in that** the pipe (18) consists of a plurality of cold-formed pipe sections which are made of a stainless steel and joined together at their end faces.

9. Transport system (1, 1', 1") according to any one of the preceding claims, **characterised in that** the transport system (1, 1', 1") has a marking apparatus arranged on the transport platform (3) for marking a pipe section (11).

10. Transport system (1, 1', 1") according to any one of the preceding claims, **characterised in that** the transport system (1, 1', 1") has a bending apparatus (26) arranged on the transport platform (3) for defined bending of a pipe section (11).

11. Transport system (1, 1', 1") according to any one of the preceding claims, **characterised in that** the transport system (1, 1', 1") has a degreasing apparatus arranged on the transport platform (3) for degreasing the pipe.

12. Transport system (1, 1', 1") according to any one of the preceding claims, **characterised in that** the transport system (1, 1', 1") has a finishing apparatus arranged on the transport platform (3), wherein the finishing apparatus is configured and arranged such that a compression fitting can be fitted on at least one end of a pipe section using the finishing apparatus.

13. Method for delivering a pipe (18), having the steps of
coiling up the pipe (18),
receiving the pipe (18) on a holding fixture (14, 14') arranged on a transport platform (3),
transporting the transport platform (3) from a first location to a second location,
conveying the pipe (18) in a transport direction by means of a drive (20) arranged on the transport platform (3), with the result that the pipe (18) is drawn off the holding fixture (14, 14') and fed to a straightening apparatus (24) in an automated manner,
straightening the pipe (18) by means of the straightening apparatus (24) arranged on the transport platform (3),
conveying the pipe (18) such that the pipe (18) is fed to a cutting apparatus (25), and
severing the pipe (18) with the cutting apparatus (25) arranged on the transport platform, with the result that a pipe section (11) is produced with a selected length,
**characterised in that**
the pipe (18) is a pipe (18) made of a cold-worked stainless steel,
the transport system (1, 1', 1") comprises a transport container, wherein the transport platform (3) is the floor of the transport container or the transport platform (3) is received on a floor of the transport container, and
the transport system (1, 1', 1") has four side walls (4, 5, 6, 7) and a roof (8), wherein a closable unloading opening (10) is provided in one of the side walls (4, 5, 6, 7), with the result that a pipe section (11) can be taken out of the transport system (1, 1', 1") through the unloading opening (10), wherein the holding fixture (14, 14'), the drive (20), the straightening apparatus (24) and the cutting apparatus (25) are arranged such that a pipe section (11) is ejected through the unloading opening (10).

14. Method according to claim 13, **characterised in that** the conveying, the straightening and the cutting are controlled by a common controller, wherein the controller collects data which are a measure of the length of the pipe (18) drawn off the holding fixture (14, 14'), and wherein the controller transmits the data to a server via a communications interface and a data network.

## Revendications

1. Système de transport (1, 1', 1") pour un tuyau (18) avec
une plateforme de transport (3),
un logement (14, 14'), dans lequel le tuyau (18) est bobiné sur le logement (14, 14'),
un entraînement (20), dans lequel l'entraînement (20) est configuré de sorte que le tuyau (18) puisse être transporté dans une direction de transport avec l'entraînement (20), et
un appareil de dressage (24), dans lequel l'appareil de dressage (24) est configuré de sorte que le tuyau (18) puisse être redressé avec l'appareil de dressage (24), et
un appareil de coupe (25), dans lequel l'appareil de coupe (25) est configuré et disposé de sorte que le tuyau (18) puisse être sectionné avec l'appareil de coupe (25) de manière à ce qu'une section de tuyau (11) puisse être fabriquée avec une longueur sélectionnable,
dans lequel le logement(14, 14'), l'entraînement (20), l'appareil de dressage (24) et l'appareil de coupe (25) sont disposés sur la plateforme de transport (3) de sorte que le tuyau (18) puisse être retiré de manière automatisée du logement (14, 14') avec l'entraînement (20) et puisse être acheminé à l'appareil de dressage (24) et à l'appareil de coupe (25),
**caractérisé en ce que**
le tuyau (18) est un tuyau (18) en acier inoxydable durci à froid,
le système de transport (1, 1', 1") comprend un conteneur de transport, dans lequel la plateforme de transport (3) est le fond du conteneur de transport ou la plateforme de transport (3) est reçue sur un fond du conteneur de transport, et
le système de transport (1, 1', 1") présente quatre parois latérales (4, 5, 6, 7) et un toit (8), dans lequel une ouverture de prélèvement (10) pouvant être fermée est prévue dans l'une des parois latérales (4, 5, 6, 7), de sorte qu'une section de tuyau (11) soit extraite du système de transport (1, 1', 1") par l'ouverture de prélèvement (10), dans lequel le logement (14, 14'), l'entraînement (20), l'appareil de dressage (24) et l'appareil de coupe (25) sont disposés de sorte qu'une section de tuyau (11) soit éjectable par l'ouverture de prélèvement (10).

2. Système de transport (1, 1', 1") selon la revendication précédente, **caractérisé en ce que** la plateforme de transport (3) peut au moins être grutée ou transportée ou **en ce que** la plateforme de transport (3) est reliée à un autre appareil qui peut au moins être gruté ou transporté.

3. Système de transport (1, 1', 1") selon l'une quelconque des revendications précédentes, **caractérisé en ce que** le système de transport (1, 1', 1") présente un dispositif de commande électronique (34) relié activement au moins au logement (14, 14'), à l'entraînement (20) ou à l'appareil de coupe (25), dans lequel le dispositif de commande (34) est configuré de sorte que le dispositif de commande (34), lors d'un fonctionnement du système de transport (1, 1', 1"), reçoive des données d'au moins le logement (14, 14'), l'entraînement (20) ou l'appareil de coupe (25) et/ou émette des instructions de commande () à au moins le logement (14, 14'), l'entraînement (20) ou l'appareil de coupe (25).

4. Système de transport (1, 1', 1") selon la revendication précédente, **caractérisé en ce que** le dispositif de commande (34) comprend une interface de communication (30), dans lequel l'interface de communication (30) est configurée de sorte que des données puissent être transmises avec l'interface de communication (30) du système de transport (1, 1', 1") à un serveur (32) par l'intermédiaire d'un réseau de données (31).

5. Système de transport (1, 1', 1") selon la revendication 3 ou 4, **caractérisé en ce que** le dispositif de commande présente un appareil de lecture électronique (35) pour la lecture sans contact d'un support de données (36).

6. Système de transport (1, 1', 1") selon la revendication 5, **caractérisé en ce que** le système de transport (1, 1', 1") présente un tambour (19) pour le tuyau bobiné (18), dans lequel le tambour (19) est reçu sur le logement (14, 14') et dans lequel le tambour (19) est pourvu d'un support de données (36) lisible sans contact qui est lisible par l'appareil de lecture (35).

7. Système de transport (1, 1', 1") selon la revendication 5 ou 6, **caractérisé en ce que** le système de transport (1, 1', 1") présente un tuyau bobiné (18), dans lequel le tuyau (18) est reçu sur le logement (14, 14') et le tuyau (18) est pourvu d'un support de données lisible sans contact qui est lisible par l'appareil de lecture.

8. Système de transport (1, 1', 1") selon l'une quelconque des revendications précédentes, **caractérisé en ce que** le tuyau (18) est constitué d'une pluralité de sections de tuyau en acier inoxydable formées à froid et connectées entre elles au niveau de leurs surfaces frontales.

9. Système de transport (1, 1', 1") selon l'une quelconque des revendications précédentes, **caractérisé en ce que** le système de transport (1, 1', 1") présente un appareil de marquage disposé sur la plateforme de transport (3) pour marquer une section de tuyau (11).

10. Système de transport (1, 1', 1") selon l'une quelconque des revendications précédentes, **caractérisé en ce que** le système de transport (1, 1', 1") présente un appareil de pliage (26) disposé sur la plateforme de transport (3) pour le pliage défini d'une section de tuyau (11).

11. Système de transport (1, 1', 1") selon l'une quelconque des revendications précédentes, **caractérisé en ce que** le système de transport (1, 1', 1") présente un appareil de dégraissage disposé sur la plateforme de transport (3) pour dégraisser le tuyau.

12. Système de transport (1, 1', 1") selon l'une quelconque des revendications précédentes, **caractérisé en ce que** le système de transport (1, 1', 1") présente un appareil de confection disposé sur la plateforme de transport (3), dans lequel l'appareil de confection est configuré et disposé de sorte qu'un raccord à bague coupante puisse être monté avec l'appareil de confection au niveau au moins d'une extrémité d'une section de tuyau.

13. Procédé de livraison d'un tuyau (18) avec les étapes consistant à
bobiner le tuyau (18),
recevoir le tuyau (18) sur un logement (14, 14') disposé sur une plateforme de transport (3),
transporter la plateforme de transport (3) d'un premier endroit à un second endroit,
transporter le tuyau (18) avec un entraînement (20) disposé sur la plateforme de transport (3) dans une direction de transport, de sorte que le tuyau (18) soit retiré de manière automatisée du logement (14, 14') et acheminé vers un appareil de dressage (24),
redresser le tuyau (18) avec l'appareil de dressage (24) disposé sur la plateforme de transport (3),
transporter le tuyau (18), de sorte que le tuyau (18) soit acheminé vers un appareil de coupe (25), et
sectionner le tuyau (18) avec l'appareil de coupe (25) disposé sur la plateforme de transport, de sorte qu'une section de tuyau (11) d'une longueur sélectionnée soit fabriquée,
**caractérisé en ce que**
le tuyau (18) est un tuyau (18) en acier inoxydable durci à froid,
le système de transport (1, 1', 1") comprend un conteneur de transport, dans lequel la plateforme de transport (3) est le fond du conteneur de transport ou la plateforme de transport (3) est reçue sur un fond du conteneur de transport, et
le système de transport (1, 1', 1") présente quatre parois latérales (4, 5, 6, 7) et un toit (8), dans lequel une ouverture de prélèvement (10) pouvant être fermée est prévue dans une des parois latérales (4, 5, 6, 7), de sorte qu'une section de tuyau (11) est extraite du système de transport (1, 1', 1") par l'ouverture de prélèvement (10), dans lequel le logement (14, 14'), l'entraînement (20), l'appareil de dressage (24) et l'appareil de coupe (25) soient disposés de sorte qu'une section de tuyau (11) soit éjectée par l'ouverture de prélèvement (10).

14. Procédé selon la revendication 13, **caractérisé en ce que** le transport, le dressage et la coupe sont commandés par un dispositif de commande commun, dans lequel le dispositif de commande collecte des données qui sont une mesure de la longueur du tuyau (18) retirée du logement (14, 14'), et dans lequel le dispositif de commande transmet les données à un serveur par l'intermédiaire d'une interface de communication et d'un réseau de données.
